# EUROPÄISCHE PATENTANMELDUNG

(11) **EP 1 668 976 A1**
(43) Veröffentlichungstag der Anmeldung: **14.06.2006**
(21) Anmeldenummer: 05026562.8
(22) Anmeldetag: 06.12.2005
(51) Int. Cl.: A01D 47/00, A01D 41/06

(54) **Verfahren und Einrichtung zur konstanten Zuführung von Biomasse zu den Transport- und Arbeitseinheiten einer selbstfahrenden Erntemaschine**

(30) Priorität: 09.12.2004 DE 102004059295
(71) Anmelder: Langlott, Jürgen, 37327 Wingerode (DE)
(72) Erfinder: Langlott, Jürgen, 37327 Wingerode (DE)
(74) Vertreter: Seckel, Uwe

(57) **Zusammenfassung**

Die Erfindung betrifft ein Verfahren und eine Einrichtung, mit denen die Funktionseinheiten zur Trennung des Erntegutes von der Biomasse einer selbstfahrenden Erntemaschine mit einer konstanten Biomasse versorgt werden, deren Hauptanteil Erntegut ist. Zu diesem Zweck wird die Biomasse vor dem Erreichen der Transport- und Arbeitsorgane selektiv getrennt, in dem der abzuerntende Biomassenbestand (1) mehrfach durchtrennt wird und die Biomasse mit Erntegut über eine Ebene I den Trenneinrichtungen zum Abtrennen des Ernteguts und die abgetrennte Restbiomasse (3) über eine Ebene II zur Ablage in ein Schwad (7) oder einem Mulch-, Schlegel- oder Häckselaggregat (5) geführt wird. Dabei wird die Zufuhr des Biomassenanteils über die Ebene I variabel über eine Sensorik (4) konstant gehalten, die den abzutrennenden Biomassenbestand (1) erfaßt und in Abhängigkeit der Dichte der erfaßten Biomasse die Trennhöhe der Mehrfachtrenneinrichtung (13,13X) und/oder die Lage der Ebene I zu den Mehrfachtrenneinrichtungen (13,13X) verändert. Durch dieses Verfahren und die Einrichtung werden Belastungsschwankungen in den Funktionseinheiten beim Abtrennen des Ernteguts von der Biomasse vermieden und die Leistung der Erntemaschinen (Tonne/Stunde) kann bei gleichen spezifischen Leistungsdaten durch eine höhere Fahrgeschwindigkeit wesentlich verbessert werden.

## Beschreibung

Die Erfindung betrifft ein Verfahren und Vorrichtung zur konstanten Zuführung von Biomasse zu den Transport- und Arbeitseinheiten einer selbstfahrenden Erntemaschine für Getreide, Hülsenfrüchte, Leguminosen, Ölfrüchte und andere Biomassen.

Die funktionsgerechte Arbeitsweise der Transport- und Verarbeitungseinheit aber auch das quantitative und qualitative Ernteergebnis bei selbstfahrenden Erntemaschinen, insbesondere von Mähdreschern, wird vorwiegend vom jeweils anstehenden Biomassenbestand der abzuerntenden Kulturen bestimmt. Da sich bekanntlich die gegenwärtig auf dem Markt verfügbaren Erntemaschinen nicht selbstlaufend auf den abzuerntenden und momentan abzutrennenden Biomassenbestand einstellen, sind insbesondere bei Mähdreschern die Fähigkeiten und Kenntnisse des Fahrers entscheidend, damit die Fahrgeschwindigkeit und/oder die Einstellung der Verarbeitungseinheiten des Mähdreschers mindestens annähernd harmonisch an die auch teilweise ständig veränderten Bedingungen des Biomassenbestands angepaßt bzw. eingestellt werden können.

Folglich wird die Effektivität und die optimale Auslastung der Verarbeitsorgane wesentlich durch menschliche Fähigkeiten und Kenntnisse beeinflußt, so dass größere Belastungsschwankungen in den Funktionseinheiten unvermeidlich sind. Größere Belastungsschwankungen infolge einer ungleichmäßigen Zufuhr von Biomasse zu den Verarbeitungseinheiten führen aber zwangsläufig zu einem höheren Verschleiß und Havarien in und an den Verarbeitungseinheiten und insgesamt zu einer verringerten Leistung des Mähdreschers sowie zu Ernte- und Qualitätsverlusten, die infolge eines wechselnden Biomassengutflusss, der bis zum Reißen des Dreschgutfilms in den Verarbeitungseinheiten führen kann, unvermeidlich sind.

Um den subjektiven menschlichen Eingriff beim Bedienen eines Mähdreschers zu verringern und Belastungsschwankungen in den Verarbeitungseinheiten eines Mähdreschers weitgehend zu minimieren, sind die verschiedensten Regel- und Einstellautomatiken bekannt gerworden, um die Betriebsweise der Verarbeitungseinheiten weitgehend unabhängig von subjektiven Einflüssen auf den abgetrennten oder abzuerntenden Biomassenbestand anzupassen.

So ist beispielsweise aus der DD 68 201 eine Einrichtung zum Ausgleich unterschiedlicher Druschgutfilmdichten bekannt, mit der der Druschgutfilm abgetastet wird und das Ergebnis einem Impulsverstärker zugeführt wird. Über eine elektrohydraulische Steuereinrichtung wird bei dem Normalwert übersteigenden Druschgutfilm eine ausgangsseitig an der Schrägfördereinrichtung schwenkbar angeordnete Absperrklappe beaufschlagt, der Druschgutfilm abgezweigt, und über eine Fördereinrichtung in einen Sammelbunker geleitet, aus welchem mittels synchron mit der Absperrklappe geschalteten Dosierwalze eine kontinuierliche Druschgutmenge über eine Einlegetrommel der Druschtrommel entnommen und über eine Einlagetrommel der Dreschvorrichtung zugeführt wird.

Mit dieser Einrichtung kann zwar der Druschgutfilm konstant gehalten und somit auftretende Belastungsschwankungen minimiert werden, vorausgesetzt der abgetastete Druschgutstrom übersteigt den Normalwert des Druschgutfilms. Ist der abgetastete Druschgutfilm jedoch geringer als der Normalwert des Druschgutfilms und der Sammelbunker leer, ist diese Einrichtung wirkungslos.
Darüber hinaus wird auch bei einem Mähdrescher, der über eine Einrichtung nach der DD 68 201 verfügt, wie bei auch gegenwärtig auf den Markt verfügbaren Mähdreschern, immer der gesamte anstehende und abgetrennte Biomassenbestand den Verarbeitungseinrichtungen zugeführt, die dann im Verlauf des Verarbeitungsprozesses separiert und selektiert wird.
Damit ist die Gesamtmasse der durchfließenden Biomasse durch die Verarbeitungseinheiten immer ein leistungsbegrenzender Faktor für den Mähdrescher, so dass je nach Fruchtart nur ca. 40 - 60% der Gesamtbiomasse als Erntegut gewonnen werden kann. Folglich hat der anstehende und sich infolge der inhomogenen Bodenstruktur eines Feldes verändernde Biomassenbestand einen sehr wesentlichen Einfluß auf den Leistungsfaktor einer selbstfahrenden Erntemaschine, wie einen Mähdrescher.

Bekannt ist auch, dass Erntemaschinen für Halmfrüchte, insbesondere Mähdrescher, mit zwei Schneidwerken zum getrennten Abschneiden der Druschfrüchte, die über eine Transportvorrichtung den Verarbeitungseinheiten zugeführt werden, und der Restbiomasse, die gesondert über eine zweite Ebene auf den abgeernteten Feld abgelegt wird.

Ein derartige Erntemaschine ist u.a. aus der US 24 18 995 bekannt, die aus zwei höhenverstellbaren Schneidwerken besteht, wobei das obere Schneidwerk, das nur die Druschfrüchte abtrennt, die über einen Stetigfördere den Verarbeitungseinheiten zugeführt werden, dem unteren Schneidwerk, das die Restbiomasse abtrennt, die direkt auf dem Feld abgelegt wird, vorangestellt ist. Bei einem Mähdrescher mit dieser Schneidwerkausführung kann zwar der leistungsbegrenzende Restbiomassenanteil in den Verarbeitungseinheiten verringert werden, eine annähernd kontinuierliche gleichmäßige Beaufschlagung der Verarbeitungseinheiten während des Erntebetriebs kann auch mit dieser Schneidwerksausführung nicht gewährleistet werden.

Aus der DE 44 31 824 C1 ist eine fahrbare Vorrichtung zum Mähen und Dreschen von Halmfrüchten mit einem Mähbalken bekannt, der aus mehr als zwei Schneidwerken besteht, die vertikal gestaffelt in einem Mähbalken angeordnet sind. Der Mähbalken selbst ist oberhalb des obersten Schneidwerks in einer Schwenkachse horizontal und vertikal verdrehbar und ggf. in der Höhe der verstellbaren Schwenkachse gelagert, um auf diese Weise die Winkelstellung des Mähbalkens an die Geländebedingungen des Erntefeldes anzupassen. Durch das obere Schneidwerk wird das Erntegut nur mit einer kurzen Länge an Restbiomasse von dem Biomassenbestand abgetrennt und über einen zusätzlichen Erntegutaufnehmer, der mit einer Förderschnecke ausgebildet ist, aufgenommen und anschliessend über eine sich anschließende Ebene dem Förderschacht der Drescheinrichtung zugeführt. Gleichzeitig wird die verbleibende Restbiomasse durch die weiteren Schneidwerke mehrfach abgetrennt und über eine getrennte Ebene mittels einer Förderschnecke dem Ausstoßschacht zugeführt und ausgestoßen.
Um den Restbiomasseanteil am Erntegut gering zu halten, wird in der DE 24 18 995 C2 vorgeschlagen, dass die Schnitthöhe des obersten Schneidwerks durch die mittlere Ernteguthöhe genau bestimmt wird. Diese Bestimmung kann dabei visuell oder über Sensoren erfolgen, die dann über eine entsprechende Steuerung die Schnitthöhe des oberen Schneidwerks oder in Abhängigkeit von der Höhe des Biomassenbestandes auch den gegenseitigen Abstand der Scheidwerke einstellen.
Auch mit diesem Mähbalken kann nur der leistungsbegrenzende Restbiomasseanteil in den Verarbeitungseinheiten minimiert werden. Ein kontinuierlicher Biomassengutzuführung mit einem auf die Verbeitungseinheiten abgestimmten Massenanteil an Biomasse kann nicht gewährleistet werden. Folglich kann auch, wie bei einer Schneidwerksausführung nach der US 2 401 513, ein ständig wechselnder Dreschgutdurchsatz nicht ausgeschlossen werden. Die Folge ist, dass Drehmomentsschwankungen bzw. stark wechselnde Belastungszustände in den Verarbeitungseinrichtungen unvermeidbar sind, die nicht nur die Leistung des Mähdreschers mindern sonderen auch erhebliche Schäden am Erntegut zur Folge haben können.

Darüber hinaus sind die bisher bekannten Mähdrescher nur saisonal zum Drusch von Getreide, Hülsenfrüchten, Leguminosen und Ölfrüchten nutzbar, so dass die Nutzung saisonbedingt sehr begrenzt ist.

Aufgabe der vorliegenden Erfindung ist es daher, ein Verfahren mit einer entsprechenden Einrichtung zum mehrfachen Trennen eines Biomassenbestandes vorzuschlagen, mit dem bei einem verringerten leistungsbegrenzenden Anteil an Biomasse im Druschfilm gewährleistet wird, dass unabhängig von den anstehenden Biomassenbestand ein gleich großer Massenanteil an Biomasse in die Arbeitseinheiten eingeleitet wird, der frei von subjektiven Einflüssen ist.

Diese Aufgabe wird erfindungsgemäß mit einem Verfahren gelöst, nach dem mit dem sensorisch erfaßten und selektiv abgetrennten Biomassenbestand der Biomassengutfluß auf der oberen Ebene I zur direkten Zuführung eines leistungsspezifischen Massenanteils an Biomasse in die Verarbeitungseinheiten variabel geregelt wird.
Durch die variable Regelung des Biomassengutflusses auf der Ebene I mittels des selektiv abgetrennten Biomassenbestandes wird gewährleistet, dass den Verarbeitungseinheiten stets ein gleichmäßiger leistungsspezifischer Massenanteil an Biomasse zugeführt wird, der immer nur mit der leistungsbegrenzenden Restbiomasse belastet ist, die zur Ergänzung des leistungsspezifischen Massenanteils für die Verarbeitungseinheiten notwendig wird.

Folglich liegt stets in den Verarbeitungseinheiten ein konstant großer Druschgutfilm an, der einen maximalen Anteil an Erntefrüchte enthält, so dass die Verarbeitungseinheiten, wie Dreschtrommel und Siebe immer mit einer hohen Auslastung (Tonnen/Std.) betrieben und gleichzeitig schwankende Belastungen und mögliche Überlastungen in den Verarbeitungseinheiten verhindert werden.

Vorteilhafterweise wird zur variablen Regelung des Biomassengutflusses auf der oberen Ebene I ein auf die Verarbeitungseinheiten abgestimmter leistungsspezifischer Biomassengutfluß als Vergleichswert in eine Sensorik eingegeben und dieser Vergleichswert wird ständig mit der sensorisch erfaßten Dichte eines momentan abzutrennenden Biomassenbestands abgeglichen und bei einer ermittelten Abweichnung des selektiv getrennten und auf die Ebene I abzulegenden Anteils der Biomassen wird regelungstechnisch durch eine Veränderung der Trennlänge des selektiv zu trennenden Biomassenbestands und/oder durch einen Anteil von selektiv getrennter Restbiomasse an den leistungsspezifisch vorgegebenen Biomassengutfluß auf der Ebene I wieder angepaßt.

Durch die Regelung des Biomassengutflusses auf der Ebene I in Abhängikeit des leistungsspezifisch notwendigen Massenanteils an Biomasse für die Verarbeitungseinheiten und des anstehenden Biomassenbestandes stellt sich der einzuführende Biomassenanteil in die Verarbeitungseinheiten bereits auf der Ebene I selbständig ein und ist damit völlig frei von subjektiven Einflüssen auch dann, wenn die Erntemaschinen bei unterschiedlichen Biomassenbeständen mit einer gleichmäßigen Geschwindigkeit gefahren werden oder wenn die Bodenbeschaffenheit oder -bedingungen nur eine geringere Geschwindigkeit erlauben, obwohl die Biomassenbestände gering sind.

Zur Durchführung des Verfahrens wird eine Einrichtung vorgeschlagen, die aus
- mindestens zwei vertikal und quer zur Erntemaschine versetzten Säulenführungen besteht, die an einer variabel horizontal verstellbaren Bodenplatte festgelegt sind, die gleichzeitig die Ebene II zur Führung der Restbiomasse bildet und die durch ein Leitblech begrenzt ist, in dem eine untere Transporteinheit zur Schaffung eines Biomassenschwads umläuft,
- mehrfach vertikal angeordneten Trenneinrichtungen für den abzuerntenden Biomassenbestand besteht, die in den Säulenführungen in unterschiedlichen Trennhöhen zueinander veränderbar festgelegt sind,
- einer die Ebene I ausbildenden Fördereinrichtung zur Aufnahme und Weiterleitung der als Druschgut abgetrennten Biomasse besteht, die mit dem einen Ende in den Säulenführungen vertikal veränderbar geführt und an dem anderen Ende in einem Drehpunkt gelagert ist,
- einer oberen Transporteinheit besteht, die sich an die Fördereinrichtung anschließt und die als Druschgut getrennte Biomasse in den erntemaschinenseitigen Schacht einleitet,
- einem Leitblech besteht, das sich unterhalb der Fördereinrichtung von den Säulenführungen bis unter die obere Transporteinheit und weiter bis annähernd an die untere Transporteinheit erstreckt und die Ebene I von der Ebene II trennt,
- einem Mulch- oder Schlegel- oder Häckselaggregat besteht, das unter der Bodenplatte angeordnet ist,
- einer Sensorik zur Erfassung des Biomassenbestandes und Regelung des Biomassengutflusses in der Ebene I besteht, die auf einer Säulenführung angeordnet ist,
- einer horizontal und vertikal verstellbaren oberen Zuführungsleiteinheit für die zu erntende Biomasse besteht.

Die erfindungsgemäß ausgebildete Einrichtung ersetzt das bisher bekannte und bei Mähdreschern und Schwadmähern verwendete Schneidwerk.
Durch diese Einrichtung wird auch der anstehende Biomassenbestand in Erntegut und in Restbiomasse selektiv vom anstehenden Biomassenbestand abgetrennt, so dass nur ein geringer Anteil an Biomasse mit dem Erntegut über die Ebene I den Verarbeitungseinheiten zugeführt wird und die restliche Biomasse über die Ebene II direkt und vor dem eigentlichen Mähdrescher als Schwad oder gemulcht, gehäckselt oder geschlegelt abgelegt wird. Folglich werden die Verarbeitungseinheiten zum Gewinnen des Ernteguts nur mit einem geringen Anteil des Biomassenbestandes beaufschlagt, wodurch zum einen die Druschleistung selbst und zum anderen die Fahrgeschwindigkeit des Mähdreschers erhöht werden.
Infolge der Erfassung des anstehenden Biomassenbestandes durch die Sensorik, die in Abhängigkeit des erfaßten Biomassenbestands und in Verbindung mit der Trennhöhe der Trenneinrichtung und/oder der einseitig vertikal verstellbaren Lage der Fördereinrichtung und damit der Ebene II den Biomassengutfluss auf der Ebene I variabel regelt, ist auch gewährleistet, dass die Zuführung von Biomasse zu den Verarbeitungseinheiten zum Trennen des Ernteguts gegenüber der verbleibenden Biomasse konstant gehalten wird, wenn der erfaßte anstehende Biomassenbestand sich verändert. Folglich ist gewährleistet, dass die Verarbeitungseinheiten über die Ebene I immer mit einer konstanten Biomasse beaufschlagt werden und ein Abreißen des Druschgutfilms verhindert wird.

Bevorzugt sind in den Säulenführungen vier Trenneinrichtungen vorgesehen, deren vertikale Stellung in den Säulenführungen variierbar ist. Damit kann die Trennlänge der Biomasse sowohl für die Abtrennung des Ernteguts in Abhängigkeit des erfaßten Biomassenbestandes als auch die Trennung der Restbiomasse optimal an die weiteren Verarbeitungseinheiten angepaßt werden.

Um die Einrichtung flexibel an verschiedene Arbeitsbereiche anzupassen und verschlissene Trenneinrichtungen kostengünstig und in kürzester Zeit zu wechseln, wird erfindungsgemäß vorgeschlagen, dass die Säulenführungen mit Trenneinrichtungen in einer funktionsfähigen Segmentbauweise ausgebildet sind. In diesem Fall sind die Säulenführungen frontseitig vorteilhafterweise mit einer Leiteinrichtung für den abzuerntenden Biomassenbestand versehen, damit der Biomassenbestand, der unmittelbar vor einer Säulenführung steht, den Trenneinrichtungen problemlos zugeführt werden kann.

Zum Mulchen, Schlegeln oder Häckseln der Restbiomasse der Ebene II ist die Bodenplatte, die gleichzeitig die Ebene II bildet, als eine zweiteilige Bodenplatte ausgebildet, deren Teilbodenplatten gegeneinander verschiebbar sind. Damit kann die Restbiomasse direkt in das Mulch-, Schlegel- oder Häckselaggregat eingeleitet werden, das unter der Bodenplatte zum Mulchen, Schlegeln oder Häckseln der verbliebenen und noch stehenden Biomasse vorgesehen ist. Folglich werden weitere Häcksler und Biomassenverteiler überflüssig.

Zur spaltfreien Führung der einseitig an den Säulenstützen vertikal verstellbaren Fördereinrichtung, die gleich die Ebene I ist, sind mindestens die vertikalen Flächen der Säulenführungen, die an der Ebene I angrenzen, dem Bogenmaß angepaßt, das von der einseitig im Drehpunkt festgelegten und in bzw. an den Säulenführungen vertikal gleitend geführten Fördereinrichtung beschrieben wird.

Zur Trennung der noch verbliebenen stehenden Biomasse kann unterhalb der Bodenplatte und vor dem Mulch- oder Schlegel- oder Häckselaggregat eine zusätzliche Trenneinrichtung vorgesehen sein, die alternativ zum Mulch- oder Schlegel- oder Häckselaggregat nutzbar ist. Diese zusätzliche Trenneinrichtung ist bevorzugt ein geläufiger Messerbalken. Diese Ausführungsform empfiehlt sich, wenn die noch verbliebene stehende Biomasse nach dem Trennen in einem Biomassenschwad abgelegt werden soll.

Vorteilhafterweise ist die Einrichtung mit einem Adaptersystem versehen, mit dem die Trenneinrichtung auch an jede Ausführungsform von landwirtschaftlichen Antriebsmaschinen ankoppelbar ist.

Bei einem nach diesem Verfahren betriebenen Mähdrescher mit der vorgeschlagenen Einrichtung wird der Erntegutfluß auf ein Minimum reduziert, so dass das Massenverhältnis der Maschinengruppen bei gleicher Leistung des Mähdreschers reduziert oder die Leistungsfähigkeit wesentlich gesteigert werden kann.

Durch die Ausführungsform der Einrichtung, die das bisher bekannte Schneidwerk ersetzt, kann die Einrichtung auch in Verbindung mit anderen landwirtschaftlichen Antriebsmaschinen aber auch mit dem Mähdrescher selbst als Antriebsaggregat zum reinen Mulchen und Schlegeln von Grünflächen oder zur Wiesenmahd genutzt werden, um dieselbe in Schwad zu legen.

Folglich kann die saisonal geringe Nutzungsdauer der kostenaufwendigen Mähdrescher wesentlich verlängert werden, wodurch das Kosten-Leistungs-Verhältnis der Mähdrescher verbessert wird.

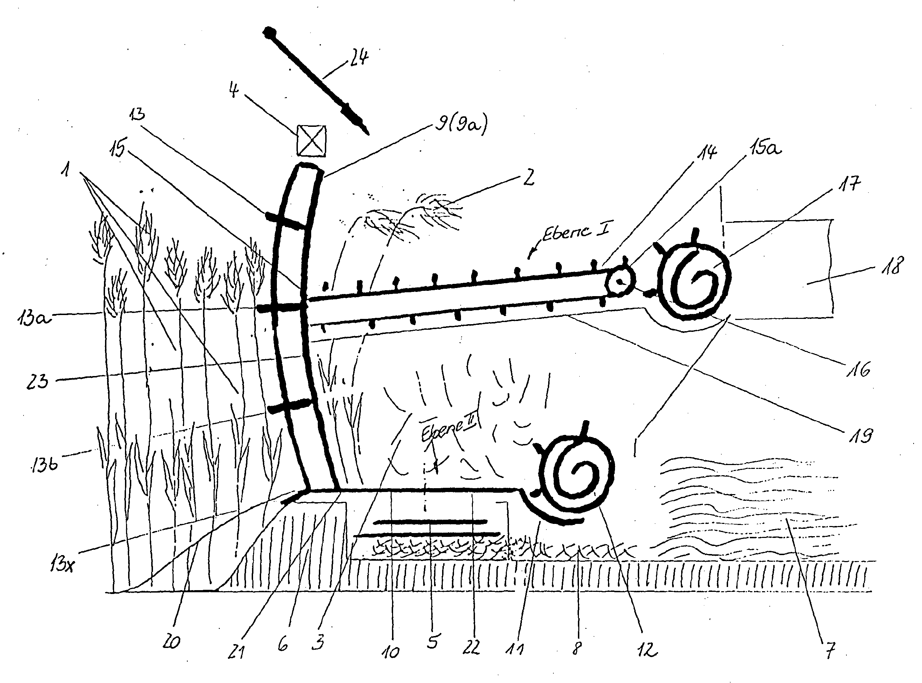

Weitere Einzelheiten der Erfindung ergeben sich aus der nachfolgenden Beschreibung und der beigefügten Zeichnung, in der eine bevorzugte Ausführungsform der Einrichtung zur Durchführung des Verfahrens gezeigt ist.

Die Zeichnung zeigt eine rein schematische Darstellung der erfinderischen Einrichtung mit bevorzugt 4 Trenneinrichtungen und einem angedeuteten Verfahrensablauf.

Die Einrichtung besteht im wesentlichen aus mindestens zwei versetzten Säulenführungen 9, 9a, den Trenneinrichtungen 13 - 13x, einer Bodenplatte 10, die die Ebene II ausbildet, einer Fördereinrichtung 14 zum angedeuteten erntemaschinenseitigen Schacht, die die Ebene I ausbildet, den Transporteinheiten 12, 17, einem Mulch-, Schlegel- oder Häckselaggregat 5 und der Sensorik 4.

Frontseitig an der Bodenplatte 10, die gleichzeitig die Ebene II bildet, sind versetzt die Säulenführungen 9, 9a starr oder lösbar festgelegt. In diesen Säulenführungen 9, 9a sind die Trenneinrichtungen 13, 13a, 13b, 13x geführt festgelegt. Die Trenneinrichtungen 13- 13 x sind dabei bevorzugt zueinander oder gemeinsam vertikal verstellbar angeordnet.

Auf der vom abzutrennenden Biomassenbestand 1 abgewandten Seite der Säulenführungen 9, 9a ist die Fördereinrichtung 14 vorgesehen, die die Ebene I zur Zuführung der abgetrennten Biomasse 2 mit dem Erntegut zum erntemaschinenseitigen Schacht 18 bildet.

Die Fördereinrichtung 14 ist mit dem einen Ende 15 an der vertikalen Fläche 23 der Säulenführungen 9, 9a vertikal gleitend verstellbar geführt und mit dem anderen Ende, an dem sich die obere Transporteinheit 17 zum erntemaschinenseitigen Schacht 18 anschließt, in einem Drehpunkt 16 gelagert. Bevorzugt sind mindestens die vertikalen Flächen 23 der Säulenführungen 9, 9a, an der die Fördereinrichtung 14 gleitend geführt ist, mit einem Oberflächenverlauf ausgebildet, der gleich dem Bogenmaß entspricht, das von der einseitig im Drehpunkt 16 festgelegten Fördereinrichtung 14 überstrichen wird, wenn das Ende 15 der Fördereinrichtung 14 vertikal verändert wird.
Damit ist sichergestellt, dass die Fördereinrichtung 14 annähernd spaltfrei an den Säulenführungen 9, 9a gleitend geführt wird.

Unter der Fördereinrichtung 14 ist ein Leitblech 19 vorgesehen, das sich von den Flächen 23 der Säulenführungen 9, 9a bis unter die obere Transporteinrichtung 17 zum erntemaschinenseitigen Schacht 18, die sich an das Ende 15a der Fördereinrichtung 14 anschließt, und weiter winklig bis in einen Bereich erstreckt, der beabstandet hinter der unteren Transporteinrichtung 12 für die Schwadablage 7 liegt. Durch diese Führung des Leitblechs 19 wird die Ebene I von der Ebene II eindeutig getrennt und es ist gewährleistet, dass keine Biomasse 2 mit dem Erntegut von der Ebene I in die Ebene II übertreten kann.

Auf einer der Säulenführungen 9; 9a ist die Sensorik 4 installiert, die jeweils den anstehenden und abzutrennenden Biomassenbestand 1 erfaßt. Im Ergebnis des erfaßten Biomassenbestandes 1 wird regelungstechnisch mindestens die Trennhöhe der Trenneinrichtung 13 und/oder die Lage des Endes 15 der Fördereinrichtung 14 an den Säulenführungen 9, 9a vertikal so eingeregelt, dass der leistungsspezifisch vorbestimmte Biomassenanteil der Biomasse 2 auf der Ebene I mit der selektiv abgetrennten Biomassebestand 1 stetig angepaßt wird.

Die Bodenplatte 10, die durch einen nicht gezeigten Rahmen umschlossen ist, ist eine zweiteilige Bodenplatte 10 und besteht aus den Teilbodenplatten 21, 22, wobei die Teilbodenplatten 21, 22 gegeneinander verschiebbar sind.

Unter der Bodenplatte 10 ist ein Mulch-, Schlegel- oder Häckselaggregat 5 für die noch nicht abgetrennte Restbiomasse 6 und zum Mulchen, Schlegeln oder Häckseln der abgetrennten Restbiomasse 3 von der Ebene II angeordnet.

Unter der Säulenführung 9, 9a und unter der Trenneinrichtung 13x ist eine Zuführungshilfe 20 für den liegenden Biomassenbestand 1 zu den Trenneinrichtungen 13 - 13x vorgesehen.

Über den Säulenführungen 9, 9a ist schwenkbar eine Zuführungsleiteinrichtung 24 zur Ebene I für die Biomasse 2 mit dem Erntegut vorgesehen.

Unter der Bodenplatte 10 und vor dem Mulch-, Schlegel- oder Häckselaggregat 5 kann eine zusätzliche nicht weiter gezeigte Trenneinrichtung vorgesehen sein, die bevorzugt ein gegenläufiger Messerbalken ist. Diese Trenneinrichtung kann alternativ zum Mulch-, Schlegel- oder Häckselaggregat 5 genutzt werden, wenn die Restbiomasse 3 und die noch nicht abgetrennte Biomasse 6 in Schwad gelegt werden soll.

An der zur Erntemaschine gerichteten Seite ist die Einrichtung mit einem nicht gezeigten Adapter versehen, mit dem die Einrichtung an den Mähdrescher, ähnlich wie ein herkömmliches Scheidwerk anbaubar ist. Dieser Adapter kann aber auch ein universeller Adapter sein, der für die verschiedensten Arten der landwirtschaftlichen Antriebsmaschinen geeignet ist.

Die Säulenführungen 9, 9a mit den Trenneinrichtungen 13 - 13x sind vorteilhafterweise in einer funktionsfähigen Segmentbauweise ausgeführt. Auf diese Weise sind die Trenneinrichtungen 13- 13x gemeinsam mit den Säulenführungen 9, 9a austauschbar und können zu verschiedenen Arbeitsbreiten aneinandergefügt werden. Vorteilhafterweise sind in diesem Fall die Stirnflächen der Säulenführungen 9, 9a, die an den abzutrennenden Biomassenbestand 1 angrenzen, mit nicht gezeigten Leiteinrichtungen für den abzutrennenden Biomassenbestand 1 versehen.

Wird eine selbstfahrende Erntemaschine mit dieser vorgeschlagenen Einrichtung betrieben, wird in die Sensorik 4 der notwendige leistungsspezifische Massenanteil der Biomasse auf den die Verarbeitungseinheiten ausgelegt sind als Vergleichswert eingegeben.
Erfaßt die Sensorik eine Dichte des momentan abzutrennenden Biomassenbestandes 1, der nicht dem Vergleichwert entspricht, wird eine eine nicht näher erläuteren Regelung angesteuert, mit der die Lage der Ebene I zu den Säulenführungen 9, 9a und /oder die Trennhöhe der Trennein-richtung 13 vertikal verändert wird. Durch diese Veränderungen wird der notwendige leistungsspezifische Massenanteil der Biomasse 2 mit dem Erntegut auf der Ebene I durch eine verlängerte oder verkürzte Trennungslänge der Biomasse 2 oder, wenn notwendig, zusätzlich durch einen Anteil von Restbiomasse 3 ergänzt, wenn das Ende 15 der Fördereinrichtung 14 und damit die Ebene I tiefer liegt als die Trenneinrichtung 13a.

Folglich kann auf diese Weise sehr einfach der erntemaschinenseitige Schacht 18 mit einer konstanten Biomasse 2 versorgt werden. Durch die weiteren Trenneinrichtungen 13c bis 13x und bei einer ausreichenden Dichte des abzutrennenden Biomassenbestandes 1 wird auch die von der Trenneinrichtung 13a abgetrennte Restbiomasse 3 über die Ebene II bei geschlossener Bodenplatte 10 der unteren Transporteinheit 12 zugeführt und in Schwad 7 gelegt oder bei geöffneter Bodenplatte 10 in das Mulch-, Schlegel- oder Häckselaggregat 5 unter der Bodenplatte 10 eingeleitet und gemeinsam mit dem noch nicht abgetrennten Biomassenbestand 6 gemulcht, geschlegelt oder gehäckselt und auf der vollen Arbeitsbreite des Mulch-, Schlegel- oder Häckselaggregates 5 und damit unter der Einrichtung abgelegt.

Folglich sind die für den Drusch der Biomasse 2 mit Erntegut zuständigen Verfahrenseinheiten beim Mähdrusch mit einer konstanten Biomasse 2 beaufschlagt und nur noch mit einer geringen Restbiomasse 3 belastet, so dass die Verfahrenseinheiten an ihrer maximalen Leistungsgrenze (Tonne/Stunde) betrieben werden können und Belastungsschwankungen, die zum Abriss des Druschgutfilms und damit zu Qualitätsschäden am Erntegut führen können oder zur Überbelastung der Funktionseinheiten, die zu Störungen und Maschinenausfällen führen können, sind ausgeschlossen.

### Aufstellung der Bezugszeichen

- 1: abzuerntender Biomassenbestand
- 2: Biomasse/Erntegut
- 3: Restbiomasse
- 4: Sensorik
- 5: Mulch- oder Schlegel- oder Häckselaggregat
- 6: nicht abgetrennte Biomasse
- 7: Biomassenschwad
- 8: verteilte Biomasse
- 9, 9a: Säulenführung
- 10: Bodenplatte
- 11: Leitblech
- 12: untere Transporteinheit
- 13 - 13x: Trenneinrichtungen
- 14: Fördereinrichtung
- 15, 15a: Enden der Fördereinrichtung
- 16: Drehpunkt
- 17: obere Transporteinheit
- 18: erntemaschinenseitiger Schacht
- 19: Leitblech
- 20: Zuführungshilfe
- 21: Teilbodenplatte
- 22: Teilbodenplatte
- 23: vertikale Flächen - Säulenführung
- 24: Zuführungsleiteinheit

## Patentansprüche

1. Verfahren zur konstanten Zuführung von Biomasse zu den Transport- und Arbeitseinheiten einer selbstfahrenden Erntemaschine für Getreide, Hülsenfrüchte, Leguminosen, Ölfrüchte und anderer Biomasse, bei dem ein sensorisch erfaßter und selektiv abgetrennter Biomassenbestand mindestens auf einer oberen und einer unteren Ebenen getrennt abgelegt wird, **dadurch gekennzeichnet, dass** mit dem sensorisch erfaßten und selektiv abgetrennten Biomassenbestand (1) der Biomassengutfluß auf der oberen Ebene I zur direkten Zuführung eines leistungsspezifischen Massenanteils an Biomasse (2) in die Verarbeitungseinheiten variabel geregelt wird.

2. Verfahren nach Anspruch 1, **dadurch gekennzeichnet, dass** zur variablen Regelung des Biomassengutflusses auf der oberen Ebene I ein auf die Verarbeitungseinheiten abgestimmter leistungsspezifischer Biomassengutfluß als Vergleichswert in die Sensorik (4) eingegeben wird und dieser Vergleichswert ständig mit der sensorisch erfaßten Dichte eines momentan abzutrennenden Biomassenbestands (1) abgeglichen wird und dass bei einer ermittelten Abweichnung des selektiv getrennten und auf die Ebene I abzulegenden Anteils der Biomassen (2) regelungstechnisch durch eine Veränderung der Trennlänge des selektiv zu trennenden Biomassenbestands (1) und/oder durch einen Anteil von selektiv getrennter Restbiomasse (3) der leistungsspezifisch vorgegebenen Biomassengutfluß auf der Ebene I wieder angepaßt wird.

3. Einrichtung zur Durchführung des Verfahrens nach Anspruch 1 und 2 mit einer Trenneinrichtung, bei der ein abzuerntender Biomassenbestand mindestens zweifach getrennt wird und bei der ein abgetrennter Biomassenanteil über eine obere Ebene zu den Verarbeitungseinheiten und der andere einfach oder mehrfach durchtrennte Biomassenanteil als Restbiomassenanteil über eine untere Ebene abgelegt wird, **dadurch** gekennzeichet, dass
- mindestens zwei vertikal und quer zur Erntemaschine versetzte Säulenführungen (9,9a), die an einer variabel horizontal verstellbaren Bodenplatte (10) festgelegt sind, die gleichzeitig die Ebene II zur Führung der Restbiomasse (3) bildet und die durch ein Leitblech (11) begrenzt ist, in der eine untere Transporteinheit (12) zur Schaffung eines Biomassenschwads (7) umläuft,
- Trenneinrichtungen (13 - 13x) für den abzuerntenden Biomassenbestand (1), die in den Säulenführungen (9,9a) in unterschiedlichen Trennhöhen zueinander verstellbar sind,
- eine die Ebene I ausbildende Fördereinrichtung (14) zur Aufnahme und Weiterleitung der als Druschgut abgetrennten Biomasse (2), die mit dem einen Ende (15) in den Säulenführungen (9, 9a) vertikal veränderbar geführt und an dem anderen Ende (15a) in einem Drehpunkt (16) gelagert ist,
- eine obere Transporteinheit (17), die sich an die Fördereinrichtung (14) anschließt und die als Druschgut getrennte Biomasse (2) in den erntemaschinenseitigen Schacht (18) einleitet,
- ein Leitblech (19), das sich unterhalb der Fördereinrichtung (14) von den Säulenführungen (9, 9a) bis unter die obere Transporteinheit (17) und weiter bis annähernd an die untere Transporteinheit (12) erstreckt und die Ebene I von der Ebene II trennt,
- ein Mulch- oder Schlegel- oder Häckselaggregat (5), das unter der Bodenplatte (10) angeordnet ist,
- eine Sensorik (4) zur Erfassung des Biomassenbestandes (1) und Regelung des Biomassengutflusses in der Ebene I, die auf einer Säulenführung (9; 9a) angeordnet ist,
- eine horizontal und vertikal verstellbare obere Zuführungsleiteinheit (24) für die zu erntende Biomasse (2).

4. Einrichtung nach Anspruch 3, **dadurch gekennzeichnet, dass** in den Säulenführungen (9,9a) vier Trenneinrichtungen (13a -13c) vorgesehen sind, deren vertikale Stellung in den Säulenführungen (9,9a) variierbar ist.

5. Einrichtung nach einem der Ansprüche 3 bis 4, **dadurch gekennzeichnet, dass** die Säulenführungen (9, 9a) mit Trenneinrichtungen (13-13x) in einer funktionsfähigen Segmentbauweise ausgebildet sind, die gegenseitig austauschbar und zu verschiedenen Arbeitsbreiten zusammenfügbar sind.

6. Einrichtung nach Anspruch 5, **dadurch gekennzeichnet, dass** jede der Säulenführungen (9;9a) frontseitig mit einer Leiteinrichtung für den abzuerntenden Biomassenbestand (1) versehen ist.

7. Einrichtung nach einem der Ansprüche 3 bis 6, **dadurch gekennzeichnet, dass** unterhalb der unteren letzten Trenneinrichtung (13c) eine Zuführungshilfe (20) für den liegenden Biomassenbestand (1) zu den Trenneinrichtungen (13-13x) vorgesehen ist.

8. Einrichtung nach einem der Ansprüche 3 bis 7, **dadurch gekennzeichnet, dass** die Bodenplatte (10) der Ebene II eine zweiteilige Bodenplatte (10) ist und die Teilbodenplatten (21,22) gegeneinander verschiebbar sind.

9. Einrichtung nach einem der Ansprüche 3 bis 8, **dadurch gekennzeichnet, dass** mindestens die an der Ebene I angrenzenden vertikalen Flächen (23) der Säulenführungen (9,9a) dem Bogenmaß angepaßt sind, das von der einseitig im Drehpunkt (16) festgelegten und in den Säulenführungen (9,9a) vertikal gleitend geführten Fördereinrichtung (14) beschrieben wird.

10. Einrichtung nach einem der Ansprüche 3 bis 9, **dadurch gekennzeichnet, dass** unterhalb der Bodenplatte (10) und vor dem Mulch- oder Schlegel- oder Häckselaggregat (5) eine zusätzliche Trenneinrichtung vorgesehen ist, die alternativ zum Mulch- oder Schlegel- oder Häckselaggregat (5) nutzbar ist.

11. Einrichtung nach Anspruch 10, **dadurch gekennzeichnet, dass** diese zusätzliche Trenneinrichtung ein gegenläufiger Messerbalken ist.

12. Einrichtung nach einem der Ansprüche 3 bis 11, **dadurch gekennzeichnet, dass** die Einrichtung über ein Adaptersystem an andere landwirtschaftliche Antriebsmaschinen ankoppelbar ist.
